# DEMANDE DE BREVET EUROPEEN

(11) **EP 2 175 074 A1**
(43) Date de publication de la demande: **14.04.2010**
(21) Numéro de dépôt: 09364007.6
(22) Date de dépôt: 05.10.2009
(51) Int. Cl.: E02B 8/08

(54) **Dispositif modulable qui permet de modifier les conditions d'écoulement hydraulique dans les ouvrages permettant les franchissements de cours d'eau**

(30) Priorité: 10.10.2008 FR 0805589
(71) Demandeur: Caudron, Denis, 56320 Lanvenegen (FR)
(72) Inventeur: Caudron, Denis, 56320 Lanvenegen (FR)

(57) **Abrégé**

Dispositif modulable qui permet de modifier les conditions d'écoulement hydraulique dans les ouvrages sous les voies de communication, (route, voie ferrée) permettant les franchissements de cours d'eau de section circulaire, ovoïde, carrée, rectangulaire de type buse, pont dalot ou pont cadre

L'invention concerne un dispositif permettant de rendre franchissable aux poissons les ouvrages en réduisant la vitesse d'écoulement et en créant des écoulements turbulents ce qui assurent des zones d'abris hydrauliques et de repos pour les poissons.

Il est constitué d'éléments métalliques plats perforés (A) de longueur variable qui, une fois assemblés à l'aide d'une pièce de raccord (B), forment une structure métallique (C) qui traverse la totalité de l'ouvrage dans le sens de la longueur.

Les structures servent de supports aux éléments transversaux appelés ralentisseurs hydrauliques (E) qui composent le dispositif et qui peuvent être en différentes matières (métaux, plastiques, bois). Les éléments E ont différentes caractéristiques de dimension en fonction du type d'ouvrage à équiper.

## Description

La présente invention concerne un dispositif modulable, fixé à un ouvrage, qui permet de modifier les conditions d'écoulement hydraulique dans ledit ouvrage permettant les franchissements de cours d'eau de section circulaire, ovoïde, carrée, rectangulaire de type buse, ou pont cadre. Les ouvrages sont le plus souvent positionnés sous les voies de communication, (routes, voies ferrées...etc) et sont constitués en matériaux béton ou en tôles ondulées.

Le dispositif modulable en modifiant les conditions d'écoulement et en augmentant la rugosité du fond à l'intérieur de l'ouvrage réduit la vitesse d'écoulement et créer des zones d'écoulement turbulent ce qui permet et facilite la migration des poissons dans l'ouvrage et donc le passage de ces derniers de l'aval vers l'amont de l'ouvrage sur des distances importantes (de quelques mètres à plusieurs dizaines de mètres). Les écoulements turbulents ainsi créés assurent des zones d'abris hydrauliques et de repos pour les poissons.
Les différents types de ralentissements des écoulements se caractérisent en fonction des formes de ralentisseurs installés, plaques ou plots.

Les procédés existants à ce jour consistent à fixer directement à l'intérieur des ouvrages des éléments isolés les uns des autres (cloisons métalliques ou plots bétons).

La mise en place de ces éléments est uniquement possible dans les ouvrages facilement accessibles par une personne soit d'un diamètre le plus souvent supérieur à 1,50 mètres (buse circulaire de diamètre 1500 millimètres). De plus la fixation de ces éléments nécessite de mettre l'ouvrage à sec avant intervention (impossibilité d'intervenir en présence de l'eau). Les éléments sont fixés de manière pérenne sans pouvoir les moduler par la suite. Par exemple, il est connu du document US 2007/0189853 un dispositif permettant d'améliorer la migration des poissons en provoquant des ralentissements hydrauliques, ledit dispositif étant constitué de divers éléments fixés entre eux et étant non modulable après fixation.

Les solutions techniques actuelles limitent donc leur utilisation aux ouvrages de grands diamètres alors que la majorité des franchissements routiers de cours d'eau est constituée par des buses circulaires de faibles diamètres (<1 mètre). En outre, ces procédés sont difficilement modulables et rendent impossible la modification de leur position dans l'ouvrage et de leurs caractéristiques (taille, espacement ...) après leur mise en place sans mettre à sec l'ouvrage.

Le dispositif a pour but de fournir une solution technique globale, modulable, robuste, simple à installer et facile à démonter permettant de rendre franchissable aux poissons la totalité des ouvrages de franchissements routiers quelques soit leurs dimensions y compris pour les petits ouvrages.

Le dispositif proposé est particulièrement adapté aux petits ouvrages car il a l'avantage de pouvoir être mis en place sans être obligé de pénétrer dans l'ouvrage.
En plus, ce procédé permet au dispositif d'une part d'être modifier après installation afin de changer ses caractéristiques techniques, (ajouter ou enlever un ou plusieurs éléments) et d'autre part pour des raisons de sécurité liées aux conditions hydrauliques en amont de l'ouvrage d'être retiré sans causer de dommage à l'ouvrage.
Dans le cadre de la description de l'invention, l'expression dispositif désigne le nom de l'invention.
Le dispositif est composé de plusieurs éléments distincts.
Les schémas annexés illustrent l'invention.
Le schéma 1 représente les différentes illustrations de ralentissements des écoulements.
Le schéma 2 représente le dispositif assemblé pour l'installation dans une buse circulaire
Le schéma 3 représente la variante du dispositif assemblé pour l'installation dans un ouvrage de section rectangulaire
Le schéma 4 représente la vue à plat des éléments métalliques qui composent la structure du dispositif, (vue de face).
Le schéma 5 représente la pièce de renfort de la structure pour les dispositifs de section rectangulaire.
Le schéma 6 représente les éléments transversaux appelés ralentisseurs hydrauliques (vue de face).
Le schéma 7 représente les éléments de fixation des ralentisseurs hydrauliques (vue de tris quarts).
Le schéma 8 représente des exemples de formes, (plots) pouvant servir de ralentisseurs hydrauliques.
Le schéma 9 représente les supports en tôles métalliques perforées.
Le schéma 10 représente le dispositif avec les ralentisseurs hydrauliques en forme de plots.
Le schéma 11 représente les éléments de fixation du dispositif sur les ouvrages.
Les schémas 1 à 7 concernent les écoulements de type I et II comme indiqué sur le schéma 1.

Les schémas 9 à 11 concernent les écoulements de type III comme indiqué sur le schéma 1.

En référence à ces schémas le dispositif est composé d'éléments métalliques plats perforés (A) de longueur variable qui, une fois assemblés à l'aide d'une pièce de raccord (B), forment une structure métallique (C) qui traverse la totalité de l'ouvrage dans le sens de la longueur.

Pour les buses ovoïdes ou cylindriques, le dispositif nécessite la mise en place d'un minimum de 3 structures (C).

Pour les ouvrages à fond plat de section carrée ou rectangulaire (pont cadre), un minimum de 3 structures (C) est nécessaire et des éléments métalliques en cornière(D) peuvent venir renforcer la structure( )C dans les angles.

La longueur de l'élément (A) est variable et sa dimension peut être définie sur mesure en fonction des caractéristiques de l'ouvrage à équiper afin de déterminer précisément l'espacement des autres éléments du Dispositif.

Les structures (C) servent de supports aux éléments transversaux appelés ralentisseurs hydrauliques (E) qui composent le dispositif et qui peuvent être en différentes matières (métaux, plastiques, bois).

Les structures (C) servent aussi de supports à des éléments (G) en tôles métalliques perforées sur lesquelles sont fixés d'autres éléments de dimensions variées en forme de plots, (H) jouant eux même le rôle de ralentisseurs hydrauliques.

Les éléments (E) peuvent prendre différentes formes et avoir différentes caractéristiques de dimension en fonction du type d'ouvrage à équiper, ils sont fixés sur les structures (C) à l'aide de pattes métalliques perforées (F) et d'éléments courants de fixation (Ecrous et boulons), de façon transversale et orientés vers l'amont ou vers l'aval.

De manière pratique, les structure (C) et les éléments (E), une fois fixés entre eux peuvent être insérés dans l'ouvrage au fur et à mesure de leur assemblage. Cette solution évite de devoir pénétrer dans l'ouvrage pour fixer les ralentisseurs hydrauliques et permet également d'équiper des ouvrages de faibles dimensions.

La fixation sur l'ouvrage du dispositif complet une fois assemblé se fait à l'aide d'une ou plusieurs pièces métalliques (I) elle même fixée sur les derniers éléments (A) constituant le dispositif. Sa fixation se fait à l'extrémité du dispositif en amont de l'ouvrage. Cette pièce peut venir renforcer le dispositif en étant positionnée à intervalles réguliers le long de la structure (C).

La fixation du dispositif peut aussi se faire avec plusieurs pièces (J) fixés aux extrémités en aval et en amont de l'ouvrage.

Le dispositif selon l'invention est particulièrement destiné à être proposé aux aménageurs en kit et sur mesure, prêt à monter et à poser lors de l'installation des ouvrages de franchissement de cours d'eau ou lors de leur remplacement.

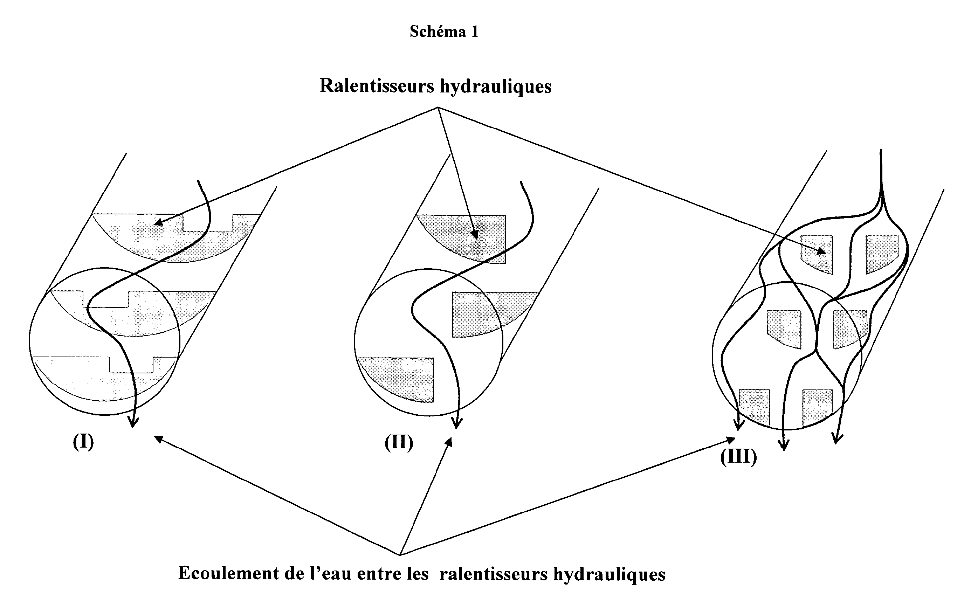

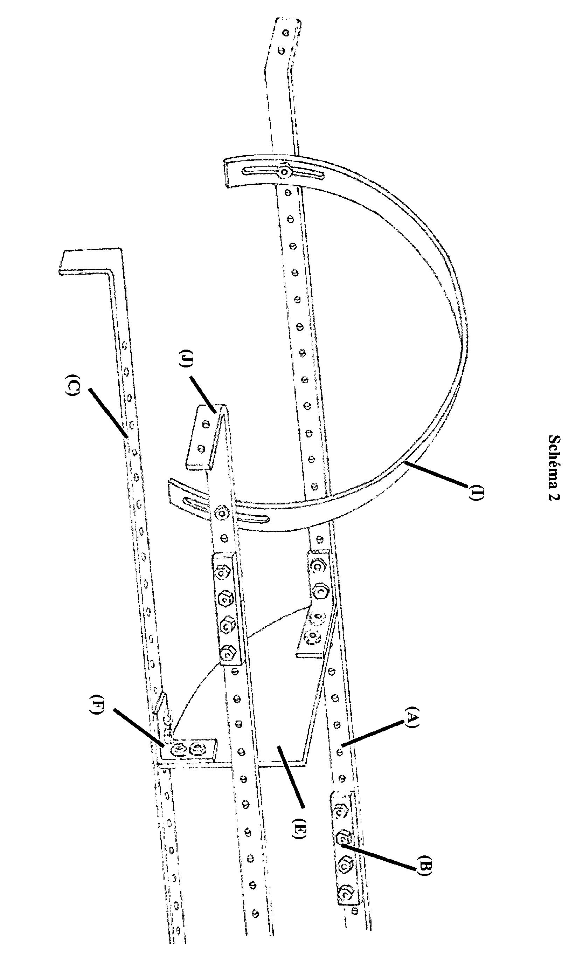

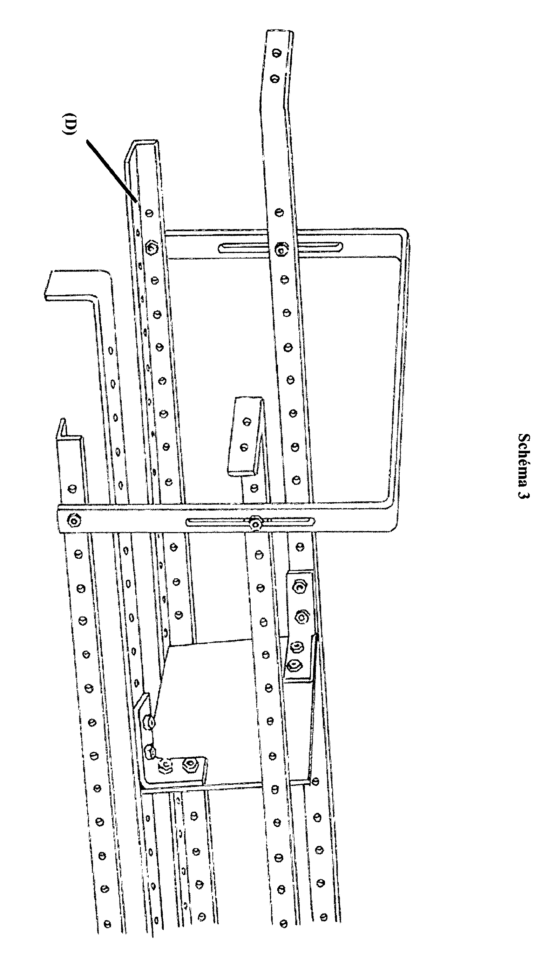

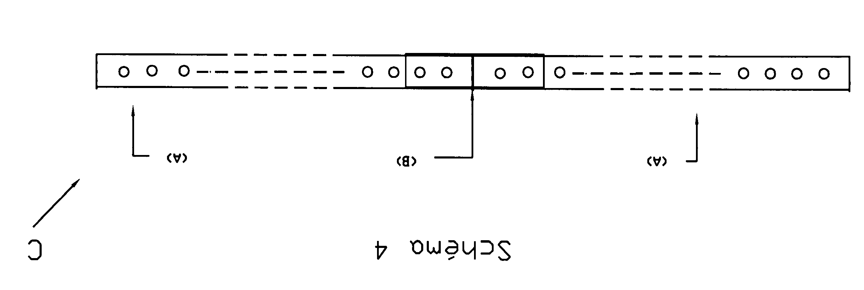

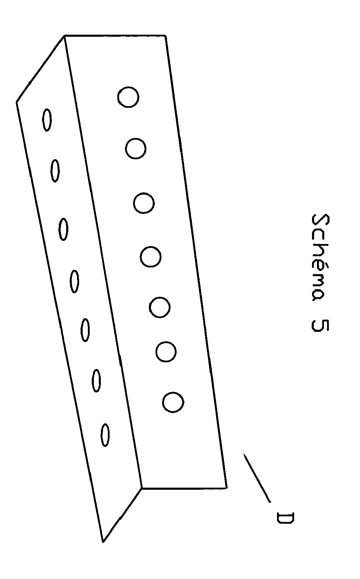

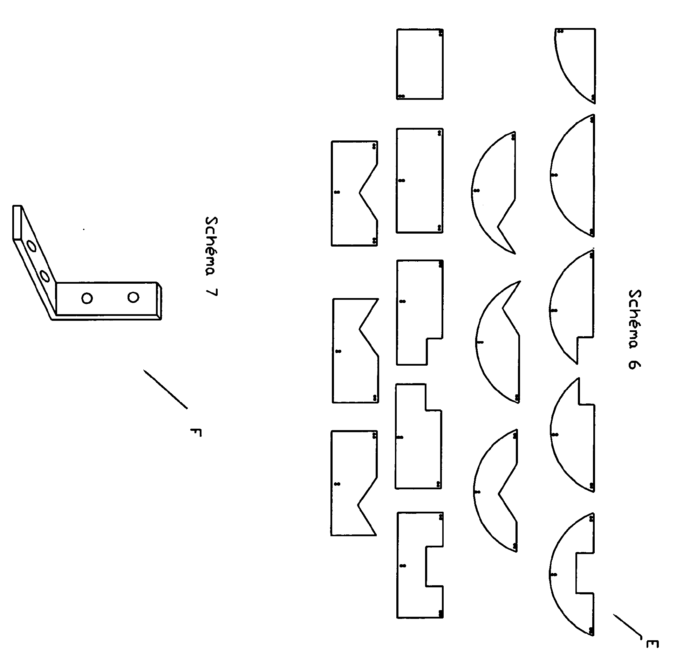

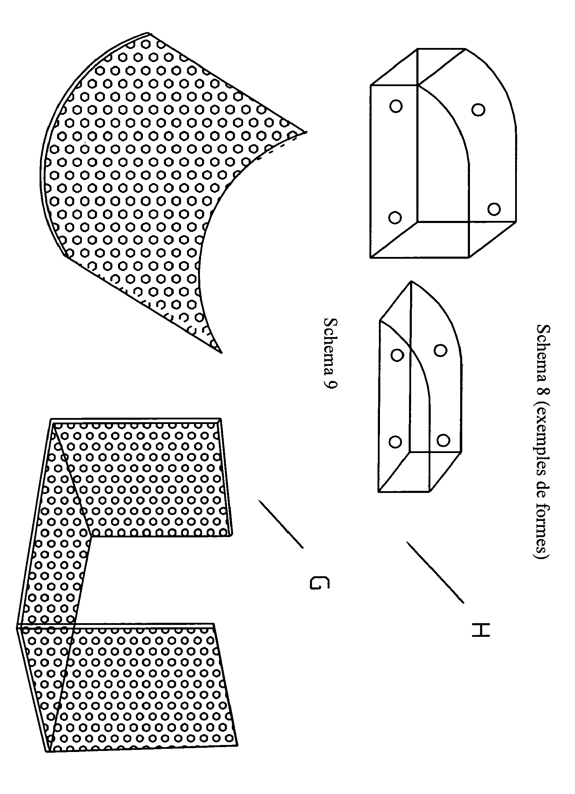

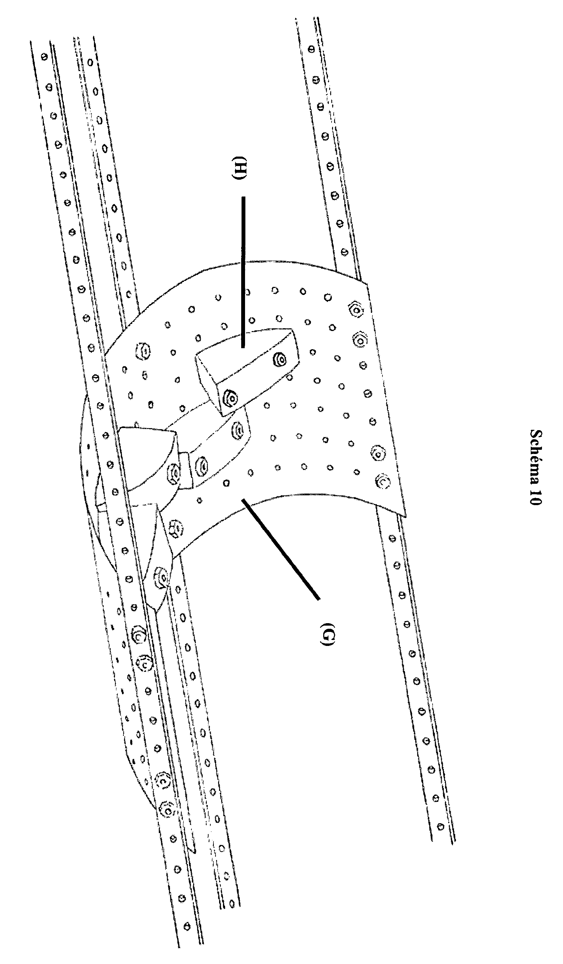

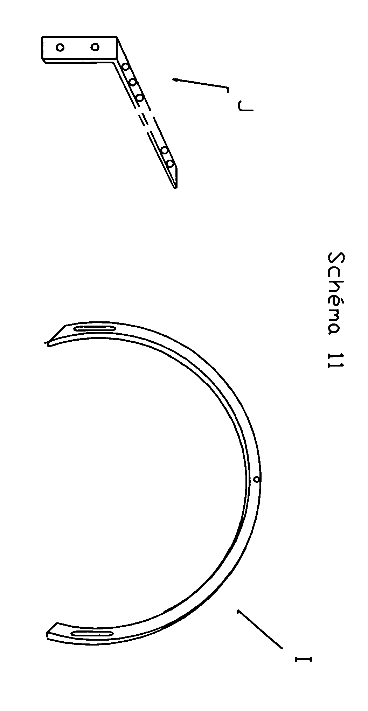

## Revendications

1. Dispositif modulable fixé dans un ouvrage permettant les franchissements de cours d'eau de section circulaire, ovoïde, carrée, rectangulaire de type buse, pont cadre, et modifiant les conditions d'écoulement hydraulique dans l'ouvrage, **caractérisé en ce qu'**il comprend :
- des éléments métalliques plats perforés (A) de longueur variable qui, une fois assemblés à l'aide des pièces de raccord (B) forment une structure métallique solide (C) qui traverse la totalité de l'ouvrage dans le sens de la longueur.
- des éléments transversaux appelés ralentisseurs hydrauliques (E)

2. Dispositif selon la revendication 1 **caractérisé en ce que** les éléments transversaux appelés ralentisseurs hydrauliques (E) qui composent le dispositif peuvent être en métal, en bois et en matières plastiques

3. Dispositif modulable selon la revendication 1 **caractérisé en ce** les éléments (E) sont fixés sur les structures C de façon transversale et orientés vers l'amont ou vers l'aval à l'aide de pattes métalliques perforées (F) et d'éléments courants de fixation (Ecrous et boulons)

4. Dispositif modulable selon la revendication 1 **caractérisé en ce que** la longueur de l'élément A est variable et sa dimension peut être définie sur mesure en fonction des caractéristiques de l'ouvrage à équiper afin de déterminer précisément l'espacement des autres éléments du dispositif.

5. Dispositif modulable selon la revendication 1 **caractérisé en ce que** pour des ouvrages de section circulaire de type buse, le dispositif nécessite la mise en place d'un minimum de 3 structures métalliques (C).

6. Dispositif modulable selon la revendication 1 **caractérisé en ce que** pour des ouvrages à fond plat de section carrée ou rectangulaire (pont cadre), le dispositif peut nécessiter en outre des éléments métalliques en cornière(D) pour renforcer la structure C dans les angles.

7. Dispositif selon la revendication 1 **caractérisé en ce que** la structure (C) est fixée sur l'ouvrage à l'aide de pièces métalliques(I) qui assurent la fixation, le renfort et la stabilité de la structure dans l'ouvrage
